# DEMANDE DE BREVET EUROPEEN

(11) **EP 3 012 773 A1**
(43) Date de publication de la demande: **27.04.2016**
(21) Numéro de dépôt: 15186244.8
(22) Date de dépôt: 22.09.2015
(51) Int. Cl.: G06K 7/10, G07C 9/00

(54) **DISPOSITIF DE LECTURE/ÉCRITURE RFID**

(30) Priorité: 20.10.2014 FR 1460052
(71) Demandeur: Schneider Electric Industries SAS, 92500 Rueil-Malmaison (FR)
(72) Inventeur: NEBOUT, Jean-Marie, 16410 GARAT (FR); GOMEZ, Ernesto, 16000 Angoulême (FR); BOUSSUGE, Christian, 16710 Saint-Yrieix (FR); TROUSSELIER, Arnaud, 16110 Pranzac (FR)
(74) Mandataire: Dufresne, Thierry

(57) **Abrégé**

L'invention concerne un dispositif (10) de lecture/écriture d'étiquettes électroniques à radiofréquence comprenant :
- Un boîtier (101),
- Une antenne (100),
- Une unité de traitement (103) reliée à l'antenne (100) et destinée à échanger des données avec une étiquette électronique (40) à radiofréquence présentée à la portée du dispositif (10) de lecture/écriture
- Au moins une interface de communication (104) destinée à être connectée à un contrôleur logique programmable (20) et commandée par l'unité de traitement (103) pour échanger des données avec le contrôleur logique programmable (20),
- Une unité de signalisation pour indiquer un ou plusieurs états de fonctionnement,
- Ladite unité de signalisation étant connectée à l'unité de traitement (103),
- L'unité de traitement (103) étant agencée pour commander ladite unité de signalisation sur la base d'une trame de commande (Tj) reçue du contrôleur logique programmable (20).

## Description

### Domaine technique de l'invention

La présente invention se rapporte à un dispositif de lecture/écriture agencé pour échanger des données sans contact avec des étiquettes électroniques à radiofréquence ainsi qu'à un système d'identification incluant ledit dispositif. Le dispositif sera notamment parfaitement adapté pour une application de type contrôle d'accès.

### Etat de la technique

Un système d'identification RFID (en français Identification par Radio Fréquence) est couramment utilisé pour identifier à l'aide d'un dispositif de lecture/écriture des objets portant chacun une étiquette électronique d'identification. A portée du dispositif de lecture/écriture, l'étiquette électronique échange, avec le dispositif, des informations diverses telles que par exemple des informations d'identification pour du contrôle d'accès ou des informations liées au processus de fabrication en cours.

Un dispositif de lecture/écriture comporte une antenne générant un champ magnétique permettant d'alimenter chaque étiquette électronique passant à sa portée et de dialoguer avec celle-ci selon un protocole de communication prédéfini. L'étiquette électronique, dite passive, est alimentée par la "porteuse" émise à partir de l'antenne de la station. L'énergie captée par l'antenne de l'étiquette est transformée en énergie électrique et alimente les circuits internes (mémoire, circuit de commande,...) de ladite étiquette pour que celle-ci mémorise des données envoyées par le dispositif et transmette les données demandées vers le dispositif.

L'échange de données en RFID sans contact entre le dispositif et l'étiquette électronique s'effectue par une technologie inductive, qui est basée sur l'exploitation d'un signal électromagnétique (porteuse) moyenne fréquence. Pour transmettre des données au dispositif de lecture/écriture, l'étiquette module la fréquence porteuse en amplitude et/ou en phase. Le dispositif de lecture/écriture transforme ensuite le signal reçu en langage binaire.

Dans beaucoup d'applications, le dispositif de lecture/écriture est relié à un contrôleur logique programmable (PLC pour « Programmable Logic Controller »). Dans une application de type contrôle d'accès, le contrôleur logique programmable reçoit, sur l'une de ses entrées, les données lues dans une étiquette électronique par le dispositif de lecture/écriture, vérifie ces données et détermine l'état à appliquer au moyen d'accès en activant ou non l'une de ses sorties. En parallèle, le contrôleur logique programmable commande une unité de signalisation séparée du lecteur et illustrant les états de fonctionnement de l'application. L'unité de signalisation reflète par exemple l'état de fonctionnement actif ou inactif de la sortie du contrôleur logique programmable, et donc l'état du moyen d'accès.

L'architecture d'un tel système ne s'avère pas toujours adaptée pour toutes les applications, car trop encombrante et contraignante dans son câblage avec une unité de signalisation séparée du dispositif de lecture/écriture. De plus, elle monopolise une capacité de traitement spécifique dans le contrôleur logique programmable pour gérer l'unité de signalisation.

Le but de l'invention est de proposer un dispositif de lecture/écriture permettant de réaliser un système d'identification plus compact, plus simple à câbler et permettant de réduire la charge de traitement du contrôleur logique programmable.

### Exposé de l'invention

Ce but est atteint par un dispositif de lecture/écriture d'étiquettes électroniques à radiofréquence comprenant :
- Un boîtier,
- Une antenne,
- Une unité de traitement reliée à l'antenne et destinée à échanger des données avec une étiquette électronique à radiofréquence présentée à la portée du dispositif de lecture/écriture,
- Au moins une interface de communication à deux fils destinée à être connectée à un contrôleur logique programmable et commandée par l'unité de traitement pour échanger des données avec le contrôleur logique programmable,
- Une unité de signalisation pour indiquer un ou plusieurs états de fonctionnement,
- Ladite unité de signalisation étant connectée à l'unité de traitement,
- L'unité de traitement étant agencée pour commander ladite unité de signalisation sur la base d'une trame de commande reçue du contrôleur logique programmable.

Selon une particularité, l'unité de signalisation comporte plusieurs indicateurs lumineux intégrés pour être visibles à travers plusieurs zones du boîtier.

Selon une autre particularité, l'interface de communication est à deux fils de type série, par exemple de type RS485.

L'invention concerne également un système d'identification comprenant un contrôleur logique programmable et un dispositif de lecture/écriture tel que défini ci-dessus, le contrôleur logique programmable comportant une interface de communication reliée à l'interface de communication du dispositif de lecture/écriture à travers une liaison de communication. Le système présente les particularités suivantes :
- le contrôleur logique programmable est agencé pour envoyer au dispositif de lecture/écriture à travers la liaison de communication au moins une trame de commande indicative d'un ou plusieurs états de fonctionnement de l'unité de signalisation,
- l'unité de traitement du dispositif de lecture/écriture est agencée pour lire ladite trame de commande et pour commander l'unité de signalisation en fonction des données incluses dans la trame de commande reçue.

Avantageusement, la liaison de communication est à deux fils de type série, par exemple de type RS485.

Préférentiellement, l'unité de signalisation comporte plusieurs indicateurs capables de prendre un état inactif ou un état actif et la trame de commande comporte plusieurs bits représentatifs chacun de l'état actif ou de l'état inactif de chaque indicateur de l'unité de signalisation.

Préférentiellement, chaque indicateur est apte à fonctionner selon plusieurs modes de fonctionnement et la trame de commande comporte plusieurs bits représentatifs chacun du mode de fonctionnement à appliquer à chaque indicateur de l'unité de signalisation.

Selon une autre particularité de l'invention, l'unité de signalisation comporte plusieurs indicateurs de type lumineux.

Selon une autre particularité de l'invention, un mode de fonctionnement appliqué à un indicateur de type lumineux est de type clignotant.

### Brève description des figures

D'autres caractéristiques et avantages vont apparaître dans la description détaillée qui suit faite en regard des dessins annexés dans lesquels :
- la figure 1 représente le système d'identification de l'invention, incluant le dispositif de lecture/écriture de l'invention et le contrôleur logique programmable,
- les figures 2A et 2B représentent deux variantes d'architecture de la trame de commande émise par le contrôleur logique programmable, à destination du dispositif de lecture/écriture, pour la commande de l'unité de signalisation.

### Description détaillée d'au moins un mode de réalisation

L'invention concerne un système d'identification incluant un dispositif 10 de lecture/écriture d'étiquettes électroniques et un contrôleur logique programmable 20.

Dans la présente demande, l'expression « dispositif de lecture/écriture » doit être comprise comme couvrant un dispositif de lecture capable uniquement de lire des données mémorisées dans une étiquette électronique ou un dispositif de lecture et d'écriture capable à la fois de lire des données mémorisées dans une étiquette électronique et d'écrire des données dans une étiquette électronique.

L'échange de données sans contact entre le dispositif 10 de lecture/écriture et une étiquette électronique 40 présentée à sa portée s'effectue par RFID qui est une technologie inductive basée sur l'exploitation d'un signal électromagnétique (porteuse) moyenne fréquence pour la transmission sans contact d'informations entre le dispositif et des étiquettes électroniques.

La technologie RFID est bien connue. De manière générale, un dispositif 10 de lecture/écriture RFID possède une antenne 100 formée par un circuit oscillant dans lequel on peut créer ou capter un champ magnétique qui permet une communication sans fil, par couplage magnétique (appelé aussi couplage inductif), avec tout circuit oscillant placé dans une zone de dialogue du dispositif, par exemple avec l'antenne 400 d'une étiquette électronique 40. Généralement, les données binaires sont échangées entre le dispositif 10 et une étiquette électronique 40 par une modulation en amplitude et/ou en phase de la fréquence porteuse du signal magnétique.

Une étiquette électronique 40 est ainsi capable de recevoir un signal radio et de renvoyer en réponse un signal différent contenant une information pertinente. Elle possède une mémoire qui permet de stocker diverses informations d'identification, de reconnaissance et/ou de process, et notamment un identifiant unique. Certaines étiquettes ne sont accessibles qu'en lecture par le dispositif de lecture/écriture alors que d'autres sont accessibles à la fois en lecture et en écriture.

Par ailleurs, dans le cas d'une étiquette électronique 40 dite passive, le signal électromagnétique (porteuse) créé par l'antenne 100 du dispositif 10 de lecture/écriture sert à alimenter électriquement l'étiquette lorsque celle-ci est dans la zone de dialogue du dispositif. L'énergie captée par l'antenne de l'étiquette est en effet transformée en une énergie électrique permettant d'alimenter les circuits internes (mémoire, unité de traitement,...) de cette étiquette. En s'alimentant avec l'énergie produite par le champ électromagnétique du dispositif de lecture/écriture, l'étiquette présente donc l'avantage de ne pas nécessiter d'alimentation interne telle qu'une pile ou une batterie.

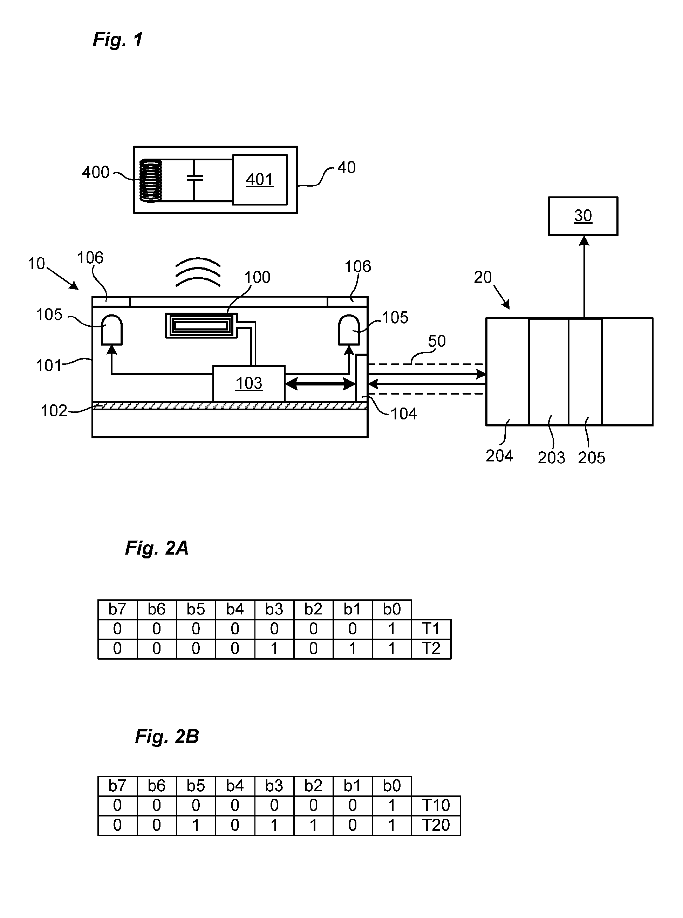

Le dispositif 10 de lecture/écriture comporte un boîtier 101. Le boîtier 101 du dispositif de lecture/écriture contient au moins une carte électronique 102 accueillant une unité de traitement 103 et une interface de communication 104 pour communiquer avec le contrôleur logique programmable 20. L'unité de traitement 103 comporte notamment un microcontrôleur ayant une mémoire. Selon l'invention, le dispositif 10 de lecture/écriture comporte une unité de signalisation pouvant comporter par exemple un ou plusieurs indicateurs, tels que des indicateurs lumineux 105, par exemple des diodes électroluminescentes, des indicateurs sonores ou vibrants. Les indicateurs lumineux 105 sont visibles de l'extérieur du dispositif à travers des zones 106 transparentes ou translucides du boîtier 101. L'unité de signalisation est connectée à l'unité de traitement 103 du dispositif 10 de lecture/écriture. L'unité de traitement 103 du dispositif 10 de lecture/écriture est agencée pour commander un changement d'état de chaque indicateur de l'unité de signalisation. La liaison entre l'unité de traitement 103 et l'unité de signalisation est préférentiellement une liaison point à point (comme sur la figure 1) mais une solution en bus multipoints avec un adressage particulier pourrait être envisagée. Pour commander chaque indicateur de l'unité de signalisation, le microcontrôleur de l'unité de traitement 103 est agencé pour générer des signaux d'activation de relais de commande positionnés sur les circuits d'alimentation électriques des indicateurs. Bien entendu, le dispositif 10 de lecture/écriture comporte un bloc d'alimentation électrique raccordé à une source d'alimentation et agencé pour alimenter ses composants, notamment son unité de traitement 103 et son unité de signalisation. Le raccordement du bloc d'alimentation électrique se fait au travers de l'interface de communication 104.

Comme décrit précédemment, le dispositif 10 de lecture/écriture comporte également une antenne 100 qui est connectée à l'unité de traitement 103 du dispositif. L'antenne 100 peut être logée dans le boîtier (comme sur la figure 1) ou séparée de celui-ci et reliée à l'unité de traitement 103 par un câble (variante connue mais non représentée). L'antenne 100 coopère avec l'unité de traitement 103 du dispositif 10 de lecture/écriture pour échanger, sans contact, selon la technologie inductive ou RFID, des données avec des étiquettes électroniques 40 qui lui sont présentées. L'antenne 100 du dispositif de lecture/écriture génère un champ magnétique permettant d'alimenter les étiquettes électroniques 40 passant à sa portée et permet au dispositif 10 de dialoguer avec celles-ci.

Une étiquette électronique 40 comporte pour sa part une antenne 400 constituée d'un circuit oscillant LC et des circuits électroniques 401 comprenant notamment une mémoire et des moyens de traitement de données pour interpréter les requêtes envoyées par le dispositif 10 de lecture/écriture et pour envoyer les données demandées. L'étiquette électronique 40 est alimentée par la "porteuse" émise à partir de l'antenne 100 du dispositif 10 de lecture/écriture dès qu'elle arrive à portée du dispositif de lecture/écriture. L'énergie captée par l'antenne 400 de l'étiquette 40 est transformée en énergie électrique et alimente les circuits électroniques 401 internes de l'étiquette. L'étiquette électronique mémorise des données et transmet les données demandées vers le dispositif de lecture/écriture.

Le contrôleur logique programmable 20 est connecté au dispositif 10 de lecture/écriture. Il comporte un module de traitement 203 et un module de communication 204 pour échanger des données avec le dispositif de lecture/écriture à travers une liaison de communication 50. A travers cette liaison de communication 50, le contrôleur logique programmable 20 reçoit notamment les données lues dans une étiquette électronique 40 présentée à la portée du dispositif 10 de lecture/écriture. Le contrôleur logique programmable 20, à l'aide de son module de traitement 203, vérifie les données reçues. Après vérification de ces données, le contrôleur logique programmable 20 envoie ou non un signal sur l'un de ses modules de sortie 205 auquel est par exemple connecté un actionneur 30. Il peut s'agir par exemple d'un signal de commande de gâche pour une application de contrôle d'accès.

Avantageusement, l'interface de communication 104, le module de communication 204 et la liaison de communication 50 fonctionnent suivant un protocole de type série. L'interface de communication 104 et le module de communication 204 sont par exemple de type RS232 ou RS485. La connectique utilisée sur le dispositif 10 de lecture/écriture pour se raccorder au contrôleur logique programmable est par exemple de type M12. L'échange de données entre le dispositif de lecture/écriture et le contrôleur logique programmable, notamment les données lues par le dispositif 10 de lecture/écriture dans une étiquette électronique, est réalisé à travers la liaison de communication de type série. La liaison de communication entre le contrôleur logique programmable 20 et le dispositif de lecture/écriture est à deux fils.

Le module de traitement 203 du contrôleur logique programmable 20 est également agencé pour générer et pour commander l'émission d'une trame de commande Tj de l'unité de signalisation à destination du dispositif 10 de lecture/écriture. La trame de commande Tj est émise par le contrôleur logique programmable 20 à destination du dispositif 10 de lecture/écriture à travers la liaison de communication 50, via le module de communication 204 et l'interface de communication 104.

Selon l'invention, cette trame de commande Tj (j compris entre 1 et n) est émise sur la liaison de communication 50 prédéfinie. Elle est reçue par l'unité de traitement 103 du dispositif 10 de lecture/écriture et interprétée par celle-ci pour commander l'état marche ou l'état arrêt de chaque indicateur de l'unité de signalisation et éventuellement pour attribuer un mode de fonctionnement particulier à chacun des indicateurs. Le microcontrôleur de l'unité de traitement 103 agit par exemple sur des relais de commande des indicateurs de l'unité de signalisation. Cette trame de commande est émise sur les deux fils de la liaison de communication 50, au même titre que les autres données échangées entre le dispositif 10 de lecture/écriture et le contrôleur logique programmable 20, c'est-à-dire toute autre trame de commande en provenance du contrôleur logique programmable ou les trames destinées à rapporter l'état de la détection réalisée par le dispositif 10.

Comme représenté sur les figures 2A et 2B, la trame de commande comporte plusieurs bits bi (i compris entre 0 et x-1, avec x le nombre d'indicateurs du dispositif), représentatifs chacun de l'état actif ou inactif d'un indicateur de l'unité de signalisation. De plus, si certains indicateurs sont susceptibles de présenter différents modes de fonctionnement, la trame Tj comporte également plusieurs bits bi (i allant de x à y) représentatifs d'un mode de fonctionnement particulier à attribuer à un ou plusieurs indicateurs de l'unité de signalisation. Pour un indicateur lumineux, un mode de fonctionnement est par exemple le mode clignotant. Plusieurs modes de fonctionnement de type clignotant, différents entre eux par leur fréquence de clignotement, peuvent également être prévus. Le séquencement des données d'état et de mode de fonctionnement dans la trame peut bien entendu être différent. On peut avoir par exemple les bits bi avec i pair pour l'état de l'indicateur et i impair pour le mode de fonctionnement de l'indicateur.

Sur les figures 2A et 2B, chaque ligne des tableaux représente une trame de commande distincte émise par le contrôleur logique programmable 20 à destination de l'unité de traitement 103 du dispositif 10 de lecture/écriture, via la liaison de communication 50.

Dans la configuration de la figure 2A, l'unité de signalisation ne comporte que deux indicateurs lumineux de couleurs distinctes. Sur la première trame de commande T1 émise, le premier bit b0, représentatif de l'état du premier indicateur, est à la valeur 1 correspondant à l'allumage du premier indicateur et les autres bits (b1, b2, b3,..) de la trame sont à la valeur 0. Sur la deuxième trame de commande T2 émise, le premier bit b0, représentatif de l'état du premier indicateur, est à la valeur 1 et le deuxième bit b1, représentatif de l'état du deuxième indicateur, est à la valeur 1, commandant ainsi leur allumage respectif. Par ailleurs, le quatrième bit b3 est également à la valeur 1, commandant un mode de fonctionnement particulier du deuxième indicateur, par exemple un mode de fonctionnement de type clignotant à une fréquence déterminée.

La figure 2B illustre un fonctionnement avec une unité de signalisation comprenant un indicateur lumineux de type RGB (pour Red, Green, Blue) dont la couleur est déterminée par la combinaison des couleurs de plusieurs diodes électroluminescentes. Sur la première trame T10, seul le premier bit étant à la valeur 1, l'indicateur lumineux aura donc la couleur rouge. Sur la deuxième trame, le premier bit et le troisième bit sont à la valeur 1, l'indicateur lumineux aura donc la couleur violette (mélange de rouge et bleu). Le quatrième bit et le sixième bit étant également à la valeur 1, le mode de fonctionnement clignotant est commandé pour les deux diodes, entraînant un éclairage violet clignotant.

Il faut également noter que l'unité de signalisation du dispositif de lecture/écriture peut comporter certains indicateurs (non représentés) dont les états sont pilotés uniquement par le dispositif 10 de lecture/écriture et non par le contrôleur logique programmable 20, comme décrit ci-dessus dans l'invention. Les états de ces indicateurs résultent par exemple de diagnostics internes réalisés par le dispositif 10 de lecture/écriture.

L'invention présente plusieurs avantages, parmi lesquels :
- La trame de commande Tj étant émise sur la liaison série par le contrôleur logique programmable 20 à destination du dispositif 10 de lecture/écriture, qui est ensuite chargé de commander chaque indicateur, la charge de traitement est ainsi déportée du contrôleur logique programmable 20 vers le dispositif 10 de lecture, notamment la gestion des modes de fonctionnement clignotant.
- L'emploi de la liaison de communication 50 de type série, déjà utilisée pour échanger des données entre le dispositif 10 de lecture/écriture et le contrôleur logique programmable 20, ne monopolise pas de sortie spécifique du contrôleur logique programmable 20 par indicateur.
- La trame de commande Tj peut venir se greffer à une trame plus générale d'échange de données du contrôleur logique programmable 20 vers le dispositif 10 de lecture/écriture.

## Revendications

1. Dispositif (10) de lecture/écriture d'étiquettes électroniques à radiofréquence comprenant :
- Un boîtier (101),
- Une antenne (100),
- Une unité de traitement (103) reliée à l'antenne (100) et destinée à échanger des données avec une étiquette électronique (40) à radiofréquence présentée à la portée du dispositif (10) de lecture/écriture,
- Au moins une interface de communication (104) à deux fils destinée à être connectée à un contrôleur logique programmable (20) et commandée par l'unité de traitement (103) pour échanger des données avec le contrôleur logique programmable (20),
- Une unité de signalisation pour indiquer un ou plusieurs états de fonctionnement,
**caractérisé en ce que** :
- Ladite unité de signalisation est connectée à l'unité de traitement (103),
- L'unité de traitement (103) est agencée pour commander ladite unité de signalisation sur la base d'une trame de commande (Tj) reçue du contrôleur logique programmable (20) sur ladite interface de communication.

2. Dispositif de lecture selon la revendication 1, **caractérisé en ce que** l'unité de signalisation comporte plusieurs indicateurs lumineux (105) intégrés pour être visibles à travers plusieurs zones (106) du boîtier (101).

3. Dispositif de lecture selon la revendication 1 ou 2, **caractérisé en ce que** l'interface de communication (104) est de type série.

4. Système d'identification comprenant un contrôleur logique programmable (20) et un dispositif (10) de lecture/écriture tel que défini dans les revendications précédentes, le contrôleur logique programmable (20) comportant une interface de communication (204) reliée à l'interface de communication (104) du dispositif (10) de lecture/écriture à travers une liaison de communication (50) à deux fils, **caractérisé en ce que** :
- le contrôleur logique programmable (20) est agencé pour envoyer au dispositif (10) de lecture/écriture à travers la liaison de communication (50) au moins une trame de commande (Tj) indicative d'un ou plusieurs états de fonctionnement de l'unité de signalisation,
- l'unité de traitement (103) du dispositif (10) de lecture/écriture est agencée pour lire ladite trame de commande (Tj) et pour commander l'unité de signalisation en fonction des données incluses dans la trame de commande (Tj) reçue.

5. Système selon la revendication 4, **caractérisé en ce que** la liaison de communication (50) est à deux fils de type série.

6. Système selon la revendication 4 ou 5, **caractérisé en ce que** l'unité de signalisation comporte plusieurs indicateurs capables de prendre un état inactif ou un état actif et **en ce que** la trame de commande (Tj) comporte plusieurs bits représentatifs chacun de l'état actif ou de l'état inactif de chaque indicateur de l'unité de signalisation.

7. Système selon la revendication 6, **caractérisé en ce que** chaque indicateur est apte à fonctionner selon plusieurs modes de fonctionnement et **en ce que** la trame de commande (Tj) comporte plusieurs bits représentatifs chacun du mode de fonctionnement à appliquer à chaque indicateur de l'unité de signalisation.

8. Système selon la revendication 7, **caractérisé en ce que** l'unité de signalisation comporte plusieurs indicateurs de type lumineux.

9. Système selon la revendication 8, **caractérisé en ce qu'**un mode de fonctionnement appliqué à un indicateur de type lumineux est de type clignotant.
